# EUROPEAN PATENT APPLICATION

(11) **EP 3 032 728 A1**
(43) Date of publication of application: **15.06.2016**
(21) Application number: 14197697.7
(22) Date of filing: 12.12.2014
(51) Int. Cl.: H02M 1/32, B60M 3/06, H02M 7/06, H02M 7/5387, H02M 7/00, H02M 7/797

(54) **Circuit arrangement**

(71) Applicant: ABB Technology AG, 8050 Zürich (CH)
(72) Inventor: Wider, Bjoern, 8048 Zürich (CH); Antoniewicz, Patrycjusz, 30-611 Krakau (PL)
(74) Representative: ABB Patent Attorneys

(57) **Abstract**

The invention relates to a circuit arrangement for electrical power supply between a three-phase AC power network (2) and a traction DC power network (4), comprising a bidirectional converter arrangement (8) comprising an AC side (9) connected to the AC power network (2), a DC side connected to a DC bus (10) having a first line (11) on a first potential and a second line (12) on a second potential, the second potential being lower than the first potential and a filter (16), a diode rectifier (3) connected to the AC power network (2) and adapted for connecting to the traction DC power network (4) for electrical power flow to the traction DC power network (4), and a bidirectional current and at least unidirectional voltage semiconductor switching device (13, 14) connected to the DC bus (10) and adapted for connecting to the traction DC power network (4) for allowing a uncontrolled energy flow from the DC power network (4) to the DC bus (10).

## Description

### Technical Field

The invention relates to a circuit arrangement for electrical power supply between a three-phase AC power network and a traction DC power network, comprising a bidirectional converter arrangement comprising an AC side connected to the AC power network, a DC side concocted to a DC bus having a first line on a first potential and a second line on a second potential, the second potential being lower than the first potential, and a filter.

### Background Art

DC power networks, also referred to as DC traction grids, are known from prior art as DC electricity grids for supplying direct current to electrified rail networks, for example to trains, tramways and the like. Traditionally, three phase alternating current from an AC power network is converted by power transformers, rotary transformers, static inverters, directional diode rectifiers and/or thyristors into a voltage and a direct current required by the trains. In recent days, possibilities for feeding back electrical energy, resulting for example from braking processes of the trains, into the AC power network have been implemented. In particular, thyristor inverters or self-commutating semiconductors like IGBTs have been installed to operate in parallel to said traditional diode rectifiers. This way, the DC power network is fed with direct current from the AC power network, and in a bidirectional way, direct current resulting for example from braking processes of the trains is fed back from the DC power network into the AC power network.

However, respective converters known from prior art for feeding back electrical energy into the AC power network have not been proven robust enough. In particular, converters known from prior art do not provide desired availability levels, as said converters are very susceptible in regard to short-circuits occurring within the DC power network. In case of a short-circuit the time required for recovering an affected converter is inacceptable high, as often slow recovering protection equipment, like mechanical breakers or fuses, have to be activated or even manually exchanged at said affected converter.

### Summary of invention

Therefore, it is an object of the invention to provide an improved circuit arrangement for electrical power supply between a three-phase AC power network and a traction DC power network, both for feeding electrical energy from the AC power network into the traction DC power network, and vice versa. In particular, it is an object of the invention to provide a more reliable and robust circuit arrangement comprising a converter for feeding direct current back from the traction DC power network to the AC power network.

The object of the invention is solved by the features of the independent claims. Preferred embodiments are detailed in the dependent claims.

Thus, the object is solved by a circuit arrangement for electrical power supply between a three-phase AC power network and a traction DC power network, comprising a bidirectional converter arrangement comprising an AC side connected to the AC power network, a DC side connected to a DC bus having a first line on a first potential and a second line on a second potential, the second potential being lower than the first potential, and a filter, a diode rectifier connected to the AC power network and adapted for connecting to the traction DC power network for electrical power flow to the traction DC power network, and a bidirectional current and at least unidirectional voltage semiconductor switching device adapted for connecting to the traction DC power network for allowing an uncontrolled power flow from the DC power network to the DC bus.

A key point of the invention is therefore to provide the bidirectional current and at least unidirectional voltage semiconductor switching device for allowing an uncontrolled power flow from the DC power network to the DC bus, whereby the bidirectional current and at least unidirectional voltage semiconductor switching device preferably comprises a self-commutating power semiconductor device and a diode, whereby the diode is connected anti-parallel to the self-commutating power semiconductor device. The diode is preferably connected with its anode to the second line and with its cathode to the DC power network, preferably to a rail. When powering a train, a tramway or the like connected to the DC power network with direct current, for example during an acceleration phase of the train, the electrical power is provided by the AC power network, then preferably transformed by a power transformer towards the voltage required by the train, then rectified to direct current by the diode rectifier and supplied to the train via the DC power network, preferably via a DC traction grid, the rail and/or a contact line. During such acceleration phase the bidirectional converter arrangement is quasi "inactive". However, if electrical power is fed back from the train during a breaking phase into the contact line, the voltage within the contact line is higher than the voltage provided by the diode rectifier. In such case, the bidirectional converter arrangement becomes "active" for feeding back electrical power into the AC power network. The contact line is preferably arranged above the rail, whereby further preferably the rail and/or the contact line are electrically connected in regular or irregular intervals along their extension by the DC bus.

The proposed solution has been proven very reliant, in particular in regard to short-circuits within the DC power network, and thus provides for increased overall availability of the circuit arrangement. Test have shown that it is especially advantageous to connect the anode of the diode to the second line and the cathode of the diode to the traction DC power network, preferably to the rail of the DC power network, while an opposite configuration is possible as well. The circuit arrangement, and its components, are preferably adapted to operate with a nominal current of ≥ 1000A, ≥ 5.000A, ≥ 10.000A, and/or ≤ 10.000A, ≤ 50.000A, or ≤ 100.000 A and/or to operate with a voltage of ≥ 1000V, ≥ 5.000V, ≥ 10.000V, or ≥ 50.000V, and/or ≤ 10.000V, ≤ 50.000V, ≤ 100.000V, or ≤ 500.000V. The power transformer is preferably provided as a so called medium voltage, MV, power transformer and/or the bidirectional converter arrangement is preferably provided as a so called voltage source inverter and/or as a voltage source converter, whereby the bidirectional converter arrangement is further preferably adapted for converting direct current to alternating current. The three phase AC power network is preferably provided as an AC grid, as an AC traction grid and/or an AC traction power network providing an AC voltage of, for example, of 110 kV. The DC power network is preferably provided as a DC traction grid comprising rails and contact lines having, for example, a DC voltage of 15 kV. Preferably, the bidirectional converter arrangement comprises a plurality of inverter cells, which are connected between the AC side and the DC side. The self-commutating power semiconductor device is, for example, provided as an IGBT or the like as described below and/or advantageously adapted for enabling and disabling the diode, depending if electrical energy is provided from the AC power network towards the DC power network or fed back from the DC power network to the AC power network. Preferably the IGBT is provided as a reverse-conducting IGBT having the diode integrally formed.

Generally, the diode rectifier can be implemented by using any means for rectifying alternating current to direct current as known to the man skilled in the art. Therefore, it is generally possible to use, for example, thyristors or other means known from prior art for rectifying alternating current to direct current. However, according to a preferred embodiment, the diode rectifier is provided as a six pulse diode rectifier. Preferably, each diode is connected to each end of each power transformer secondary winding on a secondary side of the power transformer. With such a rectifier an improved harmonic performance can be obtained when rectifying alternating current to direct current.

According to a preferred embodiment, the bidirectional converter arrangement comprises a plurality of inverter cells and each inverter cell comprises a self-commutating inverter semiconductor device and an anti-parallel diode connected anti-parallel to the self-commutating inverter semiconductor device. Preferably, the inverter cell is provided as defined in norm IEC 62501: 2009. More preferably, the self-commutating inverter semiconductor device is provided as an integrated gate-commutated thyristor device (IGCT), an insulated-gate bipolar transistor device (IGBT) and/or a silicon carbide based unipolar or bipolar switching device. In addition to that, any other suitable power semiconductor device could be used as well. Further preferably, the integrated gate-commutated thyristor device, the insulated-gate bipolar transistor device and/or a silicon carbide based unipolar or bipolar switching device is provided as bi-mode variant with integrated reverse-conducting diode as anti-parallel diode respectively as free-wheeling diode on wafer-level as bidirectional current and at least unidirectional voltage semiconductor switching device. Exemplary, the IGBT is provided as a bi-mode insulated-gate bipolar transistor device (BIGT), whereby the BIGT and the anti-parallel diode utilize the same silicon volume in both operational modes. Such devices allow for a very cheap realisation as self-commutating power semiconductor devices, e.g. IGBTs, with anti-parallel diodes on the same silicon are available as integrated devices at attractive costs.

According to another preferred embodiment, the filter comprises a capacitor connected between the second line and the first line. Thereby, due to the diode, the capacitor is not subject to voltage variations of the rail. According to another preferred embodiment, the filter comprises an inductance connected to the cathode of the diode and adapted for connecting to the DC power network for electrical power flow from the traction DC power network to the bidirectional converter arrangement. It is also possible that, in parallel, a first filter is provided as capacitor connected between the second line and the first line and a second filter is provided as inductance connected to the cathode of the diode and to the DC power network. Providing the inductance between the cathode of the diode and the DC power network is advantageous as it allows for decreasing so called circulating currents respectively circuit currents.

According to a further preferred embodiment, the circuit comprises a second diode having a second anode and a second cathode, whereby the second cathode of the second diode is connected to the first line and the second anode is connected to the cathode of the diode. According to a preferred embodiment, the circuit comprises a second self-commutating power semiconductor device connected anti-parallel to the second diode. Such embodiments allows for realizing an actively switched variant, as the second diode provides a commutation path, in order to avoid overvoltages that are damaging for the (second) self-commutating power semiconductor devices present in the circuit arrangement. Relevant, however, is only the second diode, while it is advantageous to use an industrially available and/or integrated second self-commutating power semiconductor device with the second diode provided on the same silicon in order to provide a cheap solution. Preferably, the second self-commutating power semiconductor device is provided as an IGBT, or the like as described above.

According to a preferred embodiment, the filter comprises a second inductance connected to the second cathode or the second anode and adapted for connecting to the DC power network for electrical power flow from the traction DC power network to the bidirectional converter arrangement. Providing the second inductance between the second cathode or the second anode and the DC power network is advantageous as it allows for further decreasing so called circulating currents respectively circuit currents. It is especially advantageous to implement both the inductance and the second inductance together.

According to a further preferred embodiment, the bidirectional converter arrangement is provided as a power electronic module having a common heat sink, the inverter cells are all arranged within the power electronic module and are all mechanically connected to the common heat sink, and the bidirectional current and at least unidirectional voltage semiconductor switching device, in particular the self-commutating inverter semiconductor device and the diode, is arranged within the power electronic module and is mechanically connected to the common heat sink. Preferably, the inverter cells, the self-commutating inverter semiconductor device and the diode, and preferably also the second self-commutating inverter semiconductor device and the second diode, are mechanically mounted to the common heat sink, e.g. by means of screws or other means known from prior art.

According to another preferred embodiment, the each inverter cell comprises three half-bridges each comprising two self-commutating inverter semiconductor devices and two anti-parallel diodes connected anti-parallel to the self-commutating inverter semiconductor devices and a centre tap for a respective AC phase. According to a further preferred embodiment, the circuit comprises an AC inductance connected between the power transformer and the bidirectional converter arrangement. Such AC inductance acts advantageously as a further filter, whereby further preferably each phase is provided with each one AC inductance, connected each between the power transformer and the bidirectional converter arrangement respectively with the AC side of the bidirectional converter arrangement.

Generally, the DC power network can be provided in different ways. However, according to an especially preferred embodiment, the circuit comprises the traction DC power network, the diode comprises a cathode and the traction DC power network comprises a rail and a contact line, whereby the rail is connected to the cathode and the first line is connected to the contact line. The rail and/or the contact line can be provided as any rail respectively contact line known from prior art, for example as flat-bottom steel rails respectively as an overhead line or overhead wire used to transmit electrical energy to trams, trolleybuses and/or trains. According to a further preferred embodiment, the circuit arrangement comprises the power transformer adapted for connecting to the three-phase AC power network or connected to the AC power network, wherein the AC side of the bidirectional converter arrangement is connected and the diode rectifier are connected to the power transformer.

### Brief description of drawings

These and other aspects of the invention will be apparent from and elucidated with reference to the embodiments described hereinafter.

In the drawings:
Fig. 1 shows a circuit arrangement according to a first preferred embodiment in a schematic view,
Fig. 2 shows the circuit arrangement according to a second preferred embodiment in a schematic view,
Fig. 3 shows the circuit arrangement according to a third preferred embodiment in a schematic view, and

### Description of embodiments

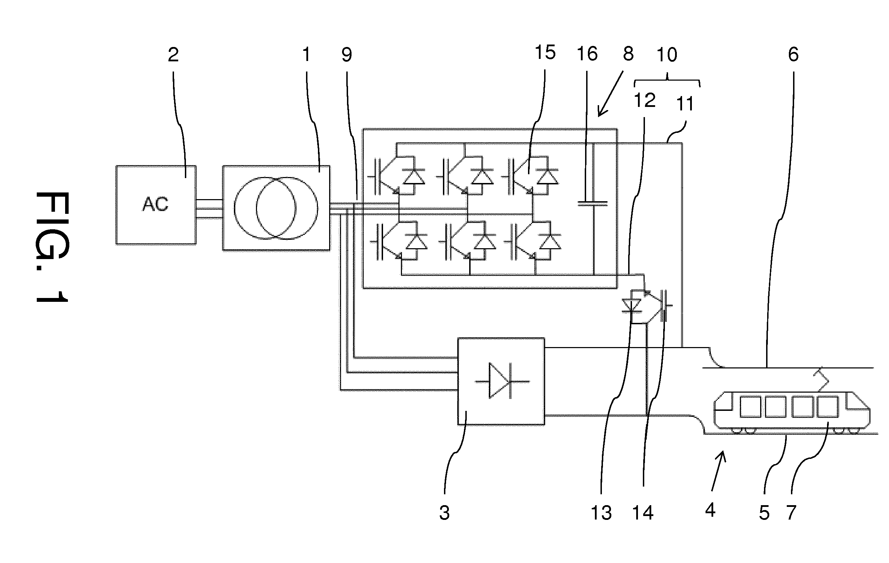

Fig. 1 shows a circuit arrangement for electrical power supply according to a first preferred embodiment in a schematic view. The circuit arrangement comprises a medium voltage power transformer 1 connected to a three-phase AC power network 2, such as an AC grid. The power transformer 1 is designed for transforming 25 kV three phase AC received from the AC power network 2 on its primary side to 6 kV on its secondary side. Each of the three phases of the secondary side of the power transformer 1 is connected to an input side of a diode rectifier 3 provided as a six pulse diode rectifier, whereby other configurations are possible as well.

The diode rectifier 3 is connected on its output side to a traction DC power network 4 such that electrical power can be provided from the three-phase AC power network 2 to the traction DC power network 4, for example provided as a DC traction grid. The DC power network 4 comprises various rails 5 and contact lines 6 for providing direct current to trains 7 or other railway systems in electrical contact with the rails 5 and contact lines 6, such as catenaries. The Figs. exemplary show only a single rail 5, a single contact line 6 and a single train 7.

In order to regenerate energy from the DC power network 4 resulting e.g. from braking processes of trains 7 associated with the rail 5 and contact line 6, a three phase bidirectional converter arrangement 8 is provided in between the power transformer 1 on one side and the rail 5 and the contact line 6 on another side. The bidirectional converter arrangement 8 comprises an AC side 9 connected to the power transformer 1, whereby in particular each phase of the bidirectional converter arrangement 8 is connected with its respective AC side 9 to a phase of the secondary side of the power transformer 1.

The bidirectional converter arrangement 8 further comprises a DC bus 10 having a first line 11 on a first, positive potential and a second line 12 on a second, negative potential such that the second potential is lower than the first potential. This way, the first line 11 is connected to the contact line 6 as well as to the output side of the diode rectifier 3, and the second line 11 is connected via a diode 13 to the rail 5 as well as to the output side of the diode rectifier 3. In other words, the diode 13 is connected between the traction DC power network 4 and the bidirectional converter arrangement 8, whereby an anode of the diode 13 is connected to the second line 12 and a cathode of the diode 13 is connected to the rail 6 i.e. in a negative path for electrical power flow from the traction DC power network 4 to the bidirectional converter arrangement 8. Opposite configurations, even if not shown, are possible as well i.e. in an alternate embodiment the diode 13 could be connected to the contact line 6.

As can be seen, a self-commutating power semiconductor device 14 is provided such that the diode 13 is connected anti-parallel to the self-commutating power semiconductor device 14. This way, the diode 13 and the self-commutating power semiconductor device 14 are provided as bidirectional current and at least unidirectional voltage semiconductor switching device 13, 14 being connected to the DC bus 10 and thus connected to the traction DC power network 4 for allowing an uncontrolled energy flow from the DC power network 4 to the DC bus 10. In particular, the self-commutating power semiconductor device 14 might be provided as an IGBT and realized with the diode 13 on the same silicon.

The bidirectional converter arrangement 8, which is provided as a voltage source inverter with a half-bridge topology, comprises six inverter cells 15 and a filter 16. Each inverter cell 15 comprises a self-commutating inverter semiconductor device, provided as an IGBT, and an anti-parallel diode connected anti-parallel to the self-commutating inverter semiconductor device. Given the half-bridge topology, each three inverter cells 15 are connected to the first line 11 and the each three inverter cells 15 are connected to the second line 12 on one side, whereby each two inverter cells 15 are connected with a centre tap to one phase to the respective AC side 9 on another side. The filter 16 is provided as a capacitor connected between the first line 11 and the second line 12. While not shown in Figs., further filters provided as inductances can be provided towards the AC power network 2. Preferably, an AC inductance is connected between the power transformer 1 and the bidirectional converter arrangement 8.

Thus, with the circuit arrangement direct current is supplied from the AC power network 2, the power transformer 1 and the diode rectifier 3 towards the train 5 via the contact line 6 and the rail 5. On the other side, electrical energy resulting from braking processes of the train 5 can flow back from the DC power network 4 back to the AC power network 2 via the voltage source inverter 8 and the power transformer 1, whereby the diode 13 and the self-commutating power semiconductor device 14 are connected between the bidirectional converter arrangement 8 and the DC power network 4. As soon as the bidirectional converter arrangement 8 is feeding back electrical energy to the AC power network 2, diode 13 becomes conducting.

The bidirectional converter arrangement 8 shown in Fig. 1 is provided as a power electronic module comprising the filter 16 and the six inverter cells 15. In other, not shown embodiments, additional filters 16 and/or inverter cells 15 can be provided, which are all integrated in the a power electronic module having a common heat sink, not shown.

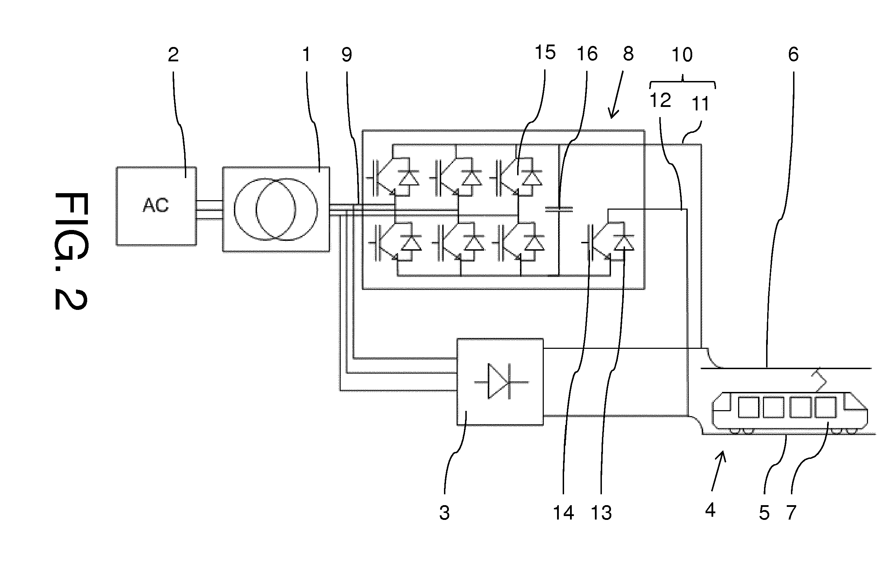

Fig. 2 shows the circuit arrangement according to a second preferred embodiment, whereby the diode 13 and the self-commutating power semiconductor device 14 is provided together with the bidirectional converter arrangement 8 on the common heat sink. In particular, the inverter cells 15, the self-commutating power semiconductor device 14 and the diode 13 are all arranged within the power electronic module and are all mechanically connected to the common heat sink by mounting to the heat sink by mean of, for example, screws.

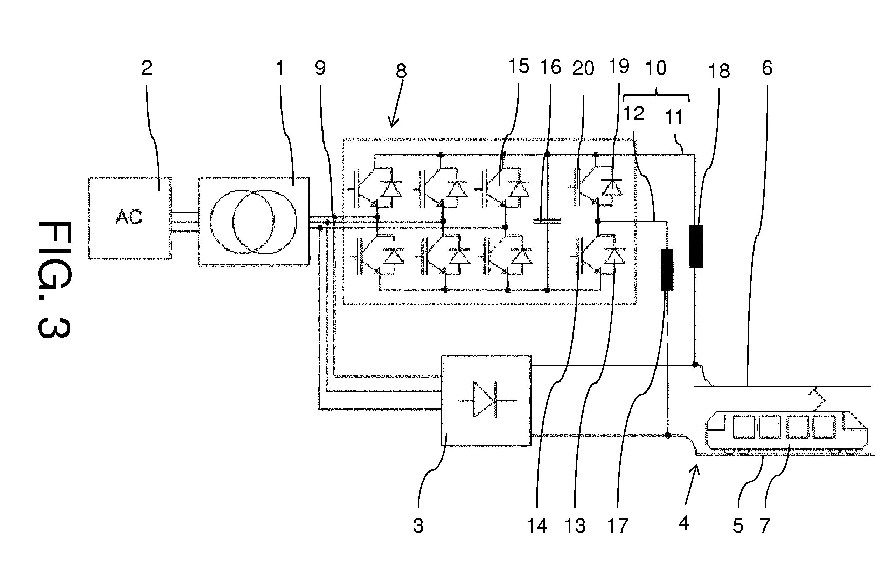

Fig. 3 shows the circuit arrangement according to a third preferred embodiment. Within this embodiment, two inductances 17, 18 are provided, whereby the first inductance 17 is connected between the cathode of the diode 13 and the rail 5. A second diode 19 is connected with its cathode to the first line 11 and with its anode to the cathode of the diode 13. A second self-commutating power semiconductor device 20, provided as an IGBT, is connected anti-parallel to the second diode 19. The second inductance 18 is connected between the cathode of the second diode 19 and the contact line 6. The second diode 19 and the second self-commutating power semiconductor device 20 are also provided on the common heat sink i.e. arranged within the power electronic module and mechanically connected to the common heat sink by mounting to the heat sink by mean of, for example, screws.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: Power transformer
- 2: AC power network
- 3: Diode rectifier
- 4: DC power network
- 5: Rail
- 6: Contact line
- 7: Train
- 8: Bidirectional converter arrangement
- 9: AC side
- 10: DC bus
- 11: First line
- 12: Second line
- 13: Diode
- 14: Self-commutating power semiconductor device
- 15: Inverter cell
- 16: Filter
- 17: Inductance
- 18: Second inductance
- 19: Second diode
- 20: Second self-commutating power semiconductor device

## Claims

1. Circuit arrangement for electrical power supply between a three-phase AC power network (2) and a traction DC power network (4), comprising
a bidirectional converter arrangement (8) comprising an AC side (9) connected to the AC power network (2), a DC side connected to a DC bus (10) having a first line (11) on a first potential and a second line (12) on a second potential, the second potential being lower than the first potential and a filter (16),
a diode rectifier (3) connected to the AC power network (2) and adapted for connecting to the traction DC power network (4) for electrical power flow to the traction DC power network (4), and
a bidirectional current and at least unidirectional voltage semiconductor switching device (13, 14) connected to the DC bus (10) and adapted for connecting to the traction DC power network (4) for allowing an uncontrolled energy flow from the DC power network (4) to the DC bus (10).

2. Circuit arrangement according to the previous claim, wherein the bidirectional current and at least unidirectional voltage semiconductor switching device (13, 14) is a self-commutating power semiconductor device (14), whereby a diode (13) is connected anti-parallel to the self-commutating power semiconductor device (14).

3. Circuit arrangement according to any of the previous claims, whereby the diode rectifier (3) is provided as a six pulse diode rectifier (3).

4. Circuit arrangement according to any of the previous claims, whereby the bidirectional converter arrangement (8) comprises a plurality of inverter cells (15) and each inverter cell (15) comprises a self-commutating inverter semiconductor device and an anti-parallel diode connected anti-parallel to the self-commutating inverter semiconductor device.

5. Circuit arrangement according to any of the previous claims, whereby the filter (16) comprises a capacitor connected between the second line (12) and the first line (11).

6. Circuit arrangement according to any of the previous claims 2 to 5, whereby the filter (16) comprises an inductance (17) connected to the cathode of the diode (13) and adapted for connecting to the DC power network (4) for electrical power flow from the traction DC power network (4) to the bidirectional converter arrangement (8).

7. Circuit arrangement according to the previous claim 2 to 6, comprising a second diode (19) having a second anode and a second cathode, whereby the second cathode of the second diode (19) is connected to the first line (11) and the second anode is connected to the cathode of the diode (13).

8. Circuit arrangement according to the previous claim, comprising a second self-commutating power semiconductor device (20) connected anti-parallel to the second diode (19).

9. Circuit arrangement according to any of the two previous claims, whereby the filter (14) comprises a second inductance (18) connected to the second cathode or the second anode and adapted for connecting to the DC power network (4) for electrical power flow from the traction DC power network (4) to the bidirectional converter arrangement (8).

10. Circuit arrangement according to any of the previous claims 4 to 9, whereby the bidirectional converter arrangement (8) is provided as a power electronic module having a common heat sink, the inverter cells (15) are all arranged within the power electronic module and are all mechanically connected to the common heat sink, and the bidirectional current and at least unidirectional voltage semiconductor switching device (13) is arranged within the power electronic module and is mechanically connected to the common heat sink.

11. Circuit arrangement according to any of the previous claims 4 to 10, whereby each inverter cell (15) comprises three half-bridges each comprising two self-commutating inverter semiconductor devices and two anti-parallel diodes connected anti-parallel to the commutating semiconductor devices and a centre tap for a respective AC phase.

12. Circuit arrangement according to any of the previous claims, comprising an AC inductance connected between the power transformer (1) and the bidirectional converter arrangement (8).

13. Circuit arrangement according to any of the previous claims 2 to 12, comprising the traction DC power network (4), the diode (13) comprises a cathode and the traction DC power network (4) comprises a rail (5) and a contact line (6), whereby the rail (5) or the first line is connected to the cathode and the first line (11) is connected to the contact line (6).

14. Circuit arrangement according to any of the previous claims, comprising a power transformer (1) adapted for connecting to the three-phase AC power network (2), wherein the AC side (9) of the bidirectional converter arrangement (8) is connected and the diode rectifier (3) are connected to the power transformer (1).
